(19) Europäisches Patentamt
European Patent Office
Office européen des brevets

(11) **EP 3 215 977 B1**

(12) **EUROPÄISCHE PATENTSCHRIFT**

(45) Veröffentlichungstag und Bekanntmachung des Hinweises auf die Patenterteilung:
**31.03.2021  Patentblatt 2021/13**

(21) Anmeldenummer: **15787586.5**

(22) Anmeldetag: **29.10.2015**

(51) Int Cl.:
*G06F 21/64* *(2013.01)*     *G07F 7/08* *(2006.01)*

(86) Internationale Anmeldenummer:
**PCT/EP2015/075103**

(87) Internationale Veröffentlichungsnummer:
**WO 2016/071196 (12.05.2016 Gazette 2016/19)**

(54) **VERFAHREN ZUR ÄNDERUNG EINER IN EINER CHIPKARTE GESPEICHERTEN DATENSTRUKTUR, SIGNATURVORRICHTUNG UND ELEKTRONISCHES SYSTEM**

METHOD FOR ALTERING A DATA STRUCTURE STORED IN A CHIP CARD, SIGNATURE DEVICE AND ELECTRONIC SYSTEM

PROCÉDÉ DE MODIFICATION D'UNE STRUCTURE DE DONNÉES ENREGISTRÉE DANS UNE CARTE À PUCE, DISPOSITIF DE SIGNATURE ET SYSTÈME ÉLECTRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.11.2014  DE 102014222622**

(43) Veröffentlichungstag der Anmeldung:
**13.09.2017  Patentblatt 2017/37**

(73) Patentinhaber: **Bundesdruckerei GmbH**
**10969 Berlin (DE)**

(72) Erfinder:
• **SCHOLZE, Steffen**
  **13469 Berlin (DE)**
• **MÜLLER, Frank**
  **10407 Berlin (DE)**
• **SCHWAN, Matthias**
  **10437 Berlin (DE)**
• **WIRTH, Klaus-Dieter**
  **12683 Berlin (DE)**
• **FILZHUTH, Elke**
  **12359 Berlin (DE)**

(74) Vertreter: **Richardt Patentanwälte PartG mbB**
**Wilhelmstraße 7**
**65185 Wiesbaden (DE)**

(56) Entgegenhaltungen:
EP-A1- 1 065 598        EP-A2- 0 781 003
WO-A1-2005/106618       DE-A1-102006 027 253
DE-A1-102008 001 149    DE-A1-102009 000 404
FR-A1- 2 856 815        US-A1- 2005 055 557
US-A1- 2008 263 367

**Beschreibung**

Die Erfindung betrifft ein Verfahren zur Änderung einer in einer Chipkarte gespeicherten Datenstruktur, eine Signaturvorrichtung zur Erzeugung einer digitalen Signatur sowie ein elektronisches System, welches eine solche Signaturvorrichtung, eine Chipkarte und ein Chipkartenterminal beinhaltet.

Aus dem Stand der Technik ist die Verwendung von Chipkarten als elektronische Dokumente bekannt, wie zum Beispiel als elektronische Reisepässe, Personalausweise oder andere Ausweisdokumente, die auch als ID-Dokumente bezeichnet werden. Solche Chipkarten haben im Allgemeinen einen geschützten elektronischen Speicher, in dem schutzbedürftige Daten gespeichert sind. Solche Daten werden bei der Personalisierung der Chipkarte in den geschützten Speicherbereich eingebracht und sind dann anschließend im Wirkbetrieb der Chipkarte nicht mehr veränderbar, um Manipulationen zu unterbinden. Wenn sich diese Daten ändern, muss also dementsprechend die Chipkarte durch eine neue ersetzt werden Das Patentdokument FR2856815 offenbart einen Chipkarten-Datenauthentifizierungsprozess, basierend auf einer Signatur von Daten, die an durch Lokalisierungsinformationen identifizierten Stellen eines Chipkartenspeichers gespeichert sind.

Der Erfindung liegt demgegenüber die Aufgabe zugrunde, ein Verfahren zur Änderung oder Löschung von in einem geschützten Speicherbereich einer Chipkarte gespeicherten Daten zu schaffen, welches eine Änderung oder Löschung der Daten im Wirkbetrieb der Chipkarte ermöglicht, sowie eine Signaturvorrichtung und ein elektronisches System.

Die Erfindung wird mit den Merkmalen der unabhängigen Patentansprüche gelöst. Ausführungsformen der Erfindung sind in den abhängigen Patentansprüchen angegeben.

Unter einer "Chipkarte" wird hier insbesondere ein Wert- oder Sicherheitsdokument verstanden, welches zumindest einen Datenspeicher zur Speicherung zumindest eines Attributs und eine Kommunikations-Schnittstelle zum Auslesen des Attributs aufweist. Das Dokument hat einen gesicherten Speicherbereich zur Speicherung des zumindest einen Attributs und einer Datenstruktur, um zu verhindern, dass das in dem Speicherbereich gespeicherte Attribut in unerlaubter Weise verändert oder ohne die dafür erforderliche Berechtigung ausgelesen wird.

Unter einem "Wert- oder Sicherheitsdokument" werden erfindungsgemäß papierbasierte und/oder kunststoffbasierte Dokumente verstanden, wie zum Beispiel elektronische Ausweisdokumente, insbesondere Reisepässe, Personalausweise, Aufenthaltstitel, Visa sowie Führerscheine, Fahrzeugscheine, Fahrzeugbriefe, Firmenausweise, Gesundheitskarten oder andere ID-Dokumente, Zahlungsmittel, insbesondere Banknoten, Bankkarten und Kreditkarten, Frachtbriefe oder sonstige Berechtigungsnachweise, verstanden, in die ein Datenspeicher zur Speicherung des zumindest einen Attributs integriert ist.

Unter dem "Wirkbetrieb" einer Chipkarte wird der Zustand einer Chipkarte verstanden, die eine Produktionsumgebung nach Personalisierung, insbesondere dem Laden des Chipkartenbetriebssystems und anderer Daten, verlassen hat, und die beispielsweise bereits von dem sogenannten Erstbenutzungsstatus in den Benutzt-Status übergegangen ist, vergleiche hierzu zum Beispiel DE 10 2007 041370 A1.

Unter einer "Personalisierungsanlage" wird hier eine Vorrichtung einer Chipkartenproduktion verstanden, der Chipkartenrohlinge zugeführt werden, um diese zu personalisieren, indem insbesondere das initiale Laden des Chipkartenbetriebssystems mithilfe des Bootloaders der Chipkarte sowie das Speichern weiterer Personalisierungsdaten erfolgt. Zu diesen Personalisierungsdaten können textuelle Angaben, Bilddaten, biometrische Daten des zukünftigen Inhabers der Chipkarte, wie Fingerabdruckdaten oder Irisscandaten, kryptografische Schlüssel und andere schutzbedürftige Daten, das heißt insbesondere Attribute bezüglich des Inhabers, des Herausgebers der Chipkarte oder der Chipkarte selbst gehören.

Unter einem "geschützten Speicherbereich" einer Chipkarte wird hier insbesondere ein elektronischer Speicher einer Chipkarte verstanden, in dem Daten gespeichert sind, wie zum Beispiel ein Attribut und/oder eine Datenstruktur, die aus dem elektronischen Speicher von einem Chipkartenterminal nur dann ausgelesen, gelöscht oder geändert werden können, wenn sich das Chipkartenterminal gegenüber der Chipkarte authentifiziert hat und/oder seine Berechtigung zum Lesen, Löschen und/oder Schreiben der betreffenden Daten gegenüber der Chipkarte nachgewiesen hat, beispielsweise mithilfe eines Berechtigungszertifikats, in dem solche Rechte des Chipkartenterminals spezifiziert sind. Beispielsweise kann es sich bei dem elektronischen Speicher um ein EEPROM, insbesondere ein Flash-EEPROM handeln.

Unter einer "Datenstruktur" werden hier insbesondere strukturiert abgespeicherte Daten verstanden, die beispielsweise in einer Baumstruktur oder einer Sequenz gespeichert sind.

Unter einer "Datengruppe" wird hier insbesondere ein Element der Datenstruktur verstanden, welches ein oder mehrere Datenwerte beinhalten kann.

Insbesondere kann die Chipkarte ein Chipkartenbetriebssystem mit einem hierarchischen Chipkartendateisystem beinhalten, welches ein oder mehrere Datenstrukturen aufweist, wie beispielsweise in der ISO/IEC 7816-4 festgelegt. Ein solches Chipkartendateisystem hat in der Regel ein Root-Verzeichnis mit der Bezeichnung "Masterfile", abgekürzt MF. Bei JavaCard-OS muss ein MF nicht zwingend vorhanden sein. Dann verwaltet jede Anwendung (Applikation) ihre Daten in einer Verzeichnisdatei, d.h. einem Directory File (DF), ohne übergeordnetes MF. Die Wurzel des DF wird dann mittels eines Application Identifiers (AID) direkt beim Wählen der Applikation gesetzt.

Eine Datendatei ist eine von einem DF abhängige Datei, welche auch als Elementary File, abgekürzt EF bezeichnet wird. Beispielsweise ist eine Datengruppe jeweils in einem EF gespeichert (vergleiche hierzu Handbuch der Chipkarten, Wolfgang Rankl, Wolfgang Effing, Carl Hanser Verlag München, 2008, Kapitel 12, insbesondere Kapitel 12.3 und 12.8.).

Unter einem "Sicherheitsobjekt" werden hier insbesondere signierte Daten verstanden, mithilfe derer die Datenintegrität und Validität der Datenstruktur geprüft werden kann, welcher das Sicherheitsobjekt zugeordnet ist.

Ausführungsformen der Erfindung sind besonders vorteilhaft, da ein Ändern oder Löschen von einer oder mehrerer Datengruppen der in der Chipkarte gespeicherten Datenstruktur ermöglicht wird, ohne dass hierdurch die Sicherheit der Chipkarte gegen unautorisierten Zugriff infrage gestellt wird. Dies ermöglicht es, in einer Chipkarte gespeicherte Daten zu aktualisieren und Anpassungen, zum Beispiel an erhöhte Sicherheitserfordernisse, vorzunehmen. Dies kann mithilfe von dezentral aufgestellten Chipkartenterminals erfolgen, welche über ein Netzwerk mit einer Signaturvorrichtung verbindbar sind, wobei sich die Signaturvorrichtung in einem Trustcenter befinden kann, welches insbesondere durch eine Zugangskontrollvorrichtung besonders gegen den Zutritt von unautorisierten Dritten gesichert ist. Insbesondere kann sich die Signaturvorrichtung in einer Chipkartenproduktionsumgebung befinden und auch für eine Personalisierungsanlage verwendet werden. Alternativ ist die Signaturvorrichtung nicht mit der Personalisierungsanlage verbunden, sondern hat eine Kopie des privaten Schlüssels so wie er in der Chipkartenproduktion für die Erzeugung von Signaturen verwendet wird und beispielsweise in einem sogenannten Hochsicherheitsmodul (HSM) gespeichert ist.

Im Weiteren werden Ausführungsformen der Erfindung mit Bezugnahme auf die Zeichnungen näher erläutert. Es zeigen:

Figur 1 ein Blockdiagramm von Ausführungsformen eines erfindungsgemäßen elektronischen Systems,

Figur 2 ein Blockdiagramm der Ausführungsformen des erfindungsgemäßen elektronischen Systems gemäß Fig. 1 nach Änderung einer der Datengruppen,

Figur 3 ein Blockdiagramm einer Weiterbildung der Ausführungsformen des erfindungsgemäßen elektronischen Systems gemäß Fig. 1 und 2, wonach zusätzlich chipindividuelle Daten in der Chipkarte gespeichert sind,

Figur 4 ein Flussdiagramm von Ausführungsformen eines erfindungsgemäßen Verfahrens.

Einander entsprechende oder identische Elemente der nachfolgenden Ausführungsformen werden jeweils mit identischen Bezugszeichen gekennzeichnet.

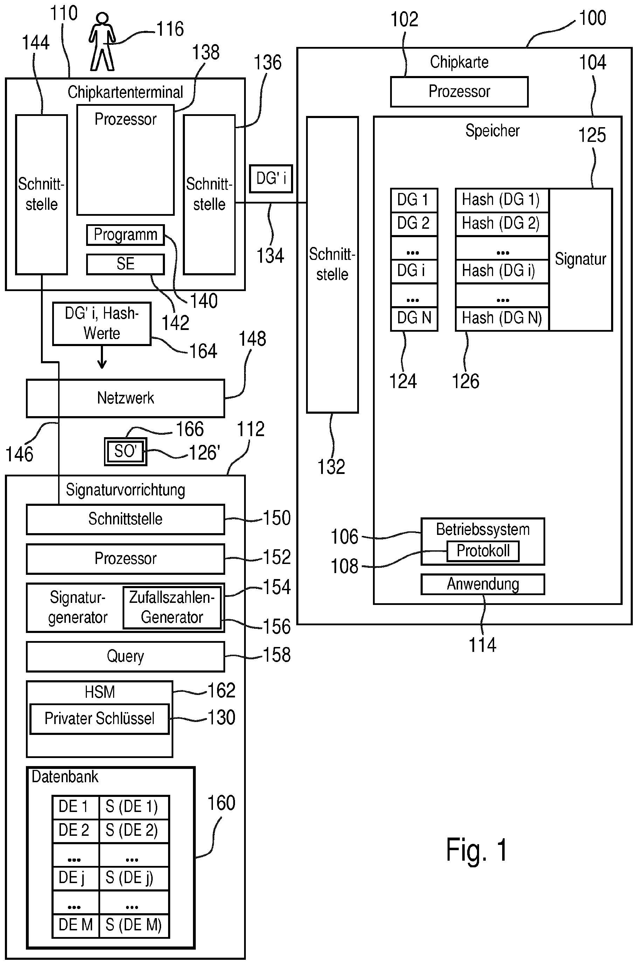

Die Figur 1 zeigt eine Chipkarte 100 mit einem Prozessor 102 und zumindest einem elektronischen Speicher 104, wobei es sich bei dem Speicher 104 um einen nichtflüchtigen beschreibbaren Speicher handelt, wie zum Beispiel ein Flash-EEPROM. In dem Speicher 104 ist ein Chipkartenbetriebssystem 106 gespeichert, welches eine Funktion 108 beinhaltet, die diejenigen Schritte eines kryptografischen Protokolls implementiert, die die Chipkarte 100 betreffen, um beispielsweise einen Chipkartenterminal 110 oder eine Signaturvorrichtung 112 gegenüber der Chipkarte 100 zu authentifizieren und vorzugsweise deren Berechtigung, zum Beispiel zum Lesen, Löschen oder Ändern von Daten in dem Speicher 104, zu prüfen.

In dem Speicher 104 kann zumindest eine Anwendung 114 gespeichert sein, wie zum Beispiel eine Signaturfunktion, damit ein Inhaberder Chipkarte 100 Dokumente mithilfe seiner Chipkarte 100 digital signieren kann, und/oder eine Anwendung zur Verfügungstellung einer digitalen Identität des Inhabers, wie zum Beispiel eine sogenannte eID-Anwendung und/oder eine Anwendung für die Zutrittskontrolle des Inhabers, zum Beispiel zu einem Gebäudebereich, und/oder eine Anwendung zur Durchführung eines elektronischen Bezahlvorgangs.

In dem Speicher 104 ist eine Datenstruktur 124 gespeichert, die eine Anzahl von N Datengruppen, nämlich die Datengruppen DG1, DG2, ... DGi, ..., DG N beinhaltet. Beispielsweise beinhaltet die Datengruppe DG1 Domainparameter zur Durchführung einer elliptischen Kurvenkryptografie, die Datengruppe DG2 einen symmetrischen Schlüssel und die Datengruppe DG3 einen öffentlichen Schlüssel und/oder weiterer kryptographischer Parameter, die nicht chipkartenindividuell sind, sondern für eine Gruppe von Chipkarten 100 identisch sind. Diese Datenstruktur 124 ist beispielsweise der Anwendung 114 zugeordnet. Beispielsweise ist jede der Datengruppen in einer separaten EF gespeichert, wobei diese EFs von demselben DF oder MF abhängig sind, woraus die Datenstruktur 124 resultiert.

Der Datenstruktur 124 ist ein Sicherheitsobjekt 126 zugeordnet. Das Sicherheitsobjekt 126 beinhaltet für jede der Datengruppen der Datenstruktur 124 einen separaten Hash-Wert, nämlich einen Hash-Wert der Datengruppe DG1, das heißt Hash (DG1), einen Hash-Wert für die Datengruppe DG2, das heißt Hash (DG2), ...

Ferner beinhaltet das Sicherheitsobjekt 126 eine Signatur 128, die über eine Kombination dieser Hash-Werte der Datengruppen der Datenstruktur 124 gebildet wird sowie vorzugsweise auch diese Kombination selbst. Hierzu werden beispielsweise die einzelnen Hash-Werte konkateniert und die resultierende Kombination K der Hash-Werte

$$K = Hash(DG1) \,||\, Hash(DG2), \,||\, ... \,||\, Hash(DG\ i) \,||\, ... \,||\, Hash(DG\ N)$$

wird dann mit einem privaten Schlüssel PrK.DS 130, zum Beispiel eines Herausgebers der Chipkarte 100, dem ein öffentlicher Schlüssel PuK.DS zugeordnet ist, verschlüsselt, um so die digitale Signatur 128 zu erhalten.

Mit anderen Worten wird die Signatur S 128 beispielsweise wie folgt berechnet:

$$S = sign\ (Hash(DG1) \,||\, Hash(DG2), \,||\, ... \,||\, Hash(DGi) \,||\, ... \,||\, Hash(DG\ N), PK)$$

wobei es sich bei **PK** um den privaten Schlüssel 130 handelt.

Vorzugsweise ist die Signaturfunktion sign so ausgebildet, dass zunächst ein Hashwert der Kombination K gebildet wird und mit diesem Hashwert die kryptografischen Operationen zum Erzeugen des Signaturwertes S durchgeführt wird. Da K bereits aus Hashwerten besteht und damit relativ kurz ist, ist es aber prinzipiell auch möglich unmittelbar K mit PK zu verschlüsseln und nicht einen Hashwert on K.

Statt einer Konkatenierung sind andere lineare oder nicht-lineare Kombinationen möglich, wie z.B. über logische Operationen, wie z.B. durch XOR der Hash-Werte.

Die Chipkarte 100 hat eine Schnittstelle 132, die zum Aufbau eines Kommunikationskanals 134 zu einer entsprechenden Kommunikationsschnittstelle 136 des Chipkartenterminals 110 ausgebildet ist. Bei den Schnittstellen 132, 136 kann es sich um kontaktbehaftete oder kontaktlose Chipkartenschnittstellen handeln, wie zum Beispiel nach einem RFID- oder NFC-Standard. Vorzugsweise wird die Übertragung mit großer Datenrate nach dem VHBR-Standard unterstützt (vergleiche ISO/IEC14443).

Vorzugsweise verfügt die Chipkarte 100 über keine eigene Energieversorgung, sondern die Energieversorgung der Chipkarte 100 erfolgt durch Einkopplung von Energie durch den Chipkartenterminal 110, insbesondere durch elektromagnetische Einkopplung über die Schnittstellen 132, 136.

Über die Schnittstelle 132 der Chipkarte 100 ist es möglich, dass mit einem Lesegerät zum Beispiel das Attribut 118 aus dem Speicher 104 ausgelesen wird, wenn sich das Lesegerät zuvor gegenüber der Chipkarte 100 authentifiziert hat und seine Berechtigung hierzu nachgewiesen hat und wenn sich ferner auch der Inhaber gegenüber der Chipkarte 100 authentifiziert hat, beispielsweise mithilfe seiner Personal Identification Number (PIN). Beispielsweise ist ein solches Lesegerät für die Chipkarte 100 als "Inspection System" im Sinne des oben genannten Technical Report der ICAO ausgebildet.

Der Chipkartenterminal 110 dient dagegen zur Änderung oder Löschung von in dem Speicher 104 gespeicherten Daten, wie zum Beispiel einer der Datengruppen der Datenstruktur 124. Je nach Ausführungsform kann der Chipkartenterminal 110 zusätzlich auch als Lesegerät, das heißt als Inspection System zum Lesen zum Beispiel des Attributs 118 ausgebildet sein.

Der Chipkartenterminal 110 verfügt über zumindest einen Prozessor 138 zur Ausführung eines Programms 140. Ferner hat das Chipkartenterminal 110 ein Lesegerät für ein Secure Element 142 oder es beinhaltet ein solches. Bei dem Secure Element 142 kann es sich zum Beispiel um eine Chipkarte oder um einen fest in dem Chipkartenterminal 110 integrierten elektronischen Speicher handeln, in dem ein dem Chipkartenterminal 110 zugeordneter privater Schlüssel für dessen Authentifizierung und Berechtigungsprüfung gegenüber der Chipkarte 100 gespeichert ist.

In dem Secure Element 142 des Chipkartenterminals 110 ist beispielsweise der private Schlüssel PrK.AD des Chipkartenterminals 110 gespeichert, zu welchem der öffentliche Schlüssel PuK.AD gehört.

Das Programm 140 des Chipkartenterminals 110 implementiert dabei die den Chipkartenterminal betreffenden Schritte des kryptografischen Protokolls, welches zusammen mit der Funktion 108 des Chipkartenbetriebssystems 106 ausgeführt werden kann.

Der Chipkartenterminal 110 hat ferner eine Netzwerkschnittstelle 144 zum Aufbau eines Kommunikationskanals 146 über ein Netzwerk 148. Bei dem Netzwerk 148 kann es sich um ein privates oder öffentliches Computernetzwerk, wie zum Beispiel das Internet, handeln. Der Kommunikationskanal 146 kann gemäß dem TCP/IP-Protokoll zu einer entsprechenden Netzwerkschnittstelle 150 der Signaturvorrichtung 112 aufgebaut werden. Beispielsweise kann hierzu in dem Chipkartenterminal 110 eine URL gespeichert sein, auf die das Programm 140 zugreift, um über die Schnittstelle 144 den Kommunikationskanal 146 aufzubauen.

Die Signaturvorrichtung 112 hat zumindest einen Prozessor 152 und einen Signaturgenerator 154 zur Erzeugung digitaler Signaturen. Vorzugsweise ist der Signaturgenerator 154 so ausgebildet, dass in dem verwendeten Signaturalgorithmus für die Erzeugung einer Signatur ein Zufallswert eingeht, um die Sicherheit zu erhöhen.

Beispielsweise wird hierzu Elliptic Curve DSA oder RSA OAEP (vgl. RFC 3447) verwendet. Die für die Durchführung des Signaturalgorithmus erforderliche Zufallszahl wird von einem Zufallszahlengenerator 156 der Signaturvorrichtung 112 geliefert, der als Software oder Hardware Zufallszahlengenerator 156 ausgebildet sein kann, wobei im ersteren Fall Pseudozufallszahlen generiert werden und im letzteren Fall ein physikalischer Prozess für die Erzeugung der Zufallszahl verwendet wird.

Der Prozessor 152 dient ferner zur Ausführung eines Programmmoduls 158 zur Erzeugung einer Datenbankabfrage, das heißt einer sogenannten Query, für eine Datenbank 160. Beispielsweise handelt es sich bei der Datenbank 160 um eine relationale Datenbank, in der Signaturen S verschiedener Datenelemente DE1, DE2, ..., DEj..., DE M gespeichert und den jeweiligen Datenelementen zugeordnet sind.

Auf die Signatur S (DEj) eines der Datenelemente DEj, welche in der Datenbank 160 gespeichert ist, kann durch eine Datenbankabfrage mithilfe des Datenelements DEj als Zugriffsschlüssel zugegriffen werden. Aufgrund einer entsprechenden Datenbankabfrage mit DEj als Zugriffsschlüssel antwortet die Datenbank 160 mit der Signatur S(DEj), die in der Datenbank 160 gespeichert ist.

Falls kein Datenbanktreffer vorliegt, das heißt, wenn für ein Datenelement DEi keine Signatur S(DEi) in der Datenbank 160 gespeichert ist, meldet die Datenbank 160 dies dem aufrufenden Programmmodul 158 ebenfalls zurück.

Die Signaturvorrichtung 112 hat ferner ein Hochsicherheitsmodul (HSM) 162, in dem der private Schlüssel 130, zum Beispiel des Herausgebers der Chipkarte 100, gespeichert ist.

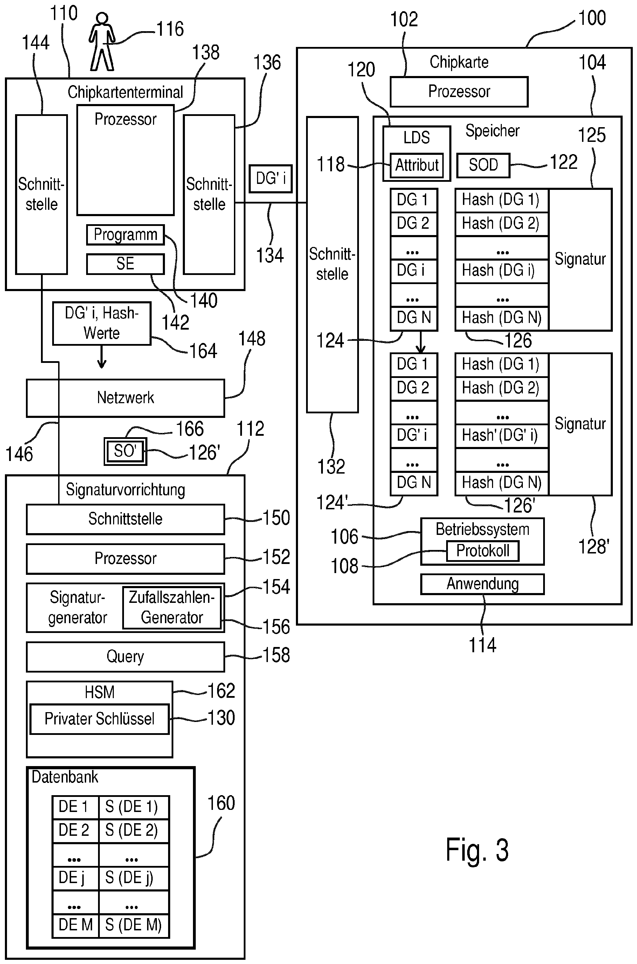

Der gleiche private Schlüssel 130 wird bei der Produktion der Chipkarte 100 für deren Personalisierung in einer Personalisierungsanlage verwendet, nämlich insbesondere für die Erzeugung der Signatur 128 des Sicherheitsobjekts 126 und ggf. der Signatur des SOD 122 (vgl. Fig. 3). Beispielsweise handelt es sich bei dem privaten Schlüssel 130 um eine Kopie desselben privaten Schlüssels, der in dem HSM der Personalisierungsanlage gespeichert ist, durch welche die initiale Personalisierung der Chipkarte 100 vorgenommen wird.

Die Chipkarte 100 befindet sich im Wirkbetrieb. Wenn während des Wirkbetriebs die Notwendigkeit entsteht, zum Beispiel kryptografische Informationen, die in der Datenstruktur 124 gespeichert sind, zu ändern, beispielsweise aufgrund erhöhter Sicherheitsanforderungen, kann dies erfolgen, ohne die Chipkarte 100 durch eine neue zu ersetzen. Dies ist besonders vorteilhaft für hoheitliche Dokumente, die eine relativ lange Gültigkeitsdauer von beispielsweise bis zu 10 Jahren aufweisen, da es innerhalb eines solchen Zeitraums nicht unwahrscheinlich ist, dass sich die Sicherheitsanforderungen ändern und/oder erhöhen. Beispielsweise kann es erforderlich sein, Domainparameter zu ändern oder die Schlüssellänge der zu verwendenden symmetrischen oder öffentlichen Schlüssel zu verlängern, was eine entsprechende Aktualisierung von einer oder mehrerer der Datengruppen der Datenstruktur 124 erforderlich macht.

Im Weiteren wird ohne Beschränkung der Allgemeinheit angenommen, dass die Datengruppe DGi der Datenstruktur 124 geändert werden soll. Hierzu kann wie folgt vorgegangen werden:

1. Die Chipkarte 100 wird Inhaberin die Reichweite der Schnittstelle 136 des Chipkartenterminals 110 gebracht, sodass elektrische Energie in die Chipkarte 100 eingekoppelt und der Kommunikationskanal 134 aufgebaut werden kann. Vorzugsweise hat das Chipkartenterminal 110 einen mechanischen Einzug zum vollständigen Einzug der Chipkarte 100 in das Innere des Chipkartenterminals 110, ähnlich wie das bei einem Bankautomaten der Fall ist. Durch den mechanischen Einzug der Chipkarte 100 in den Chipkartenterminal 110 wird sichergestellt, dass die Chipkarte 110 während des gesamten Vorgangs, der anschließend für die Änderung oder Löschung der Datengruppe DGi stattfindet, innerhalb des Chipkartenterminals 110 verbleibt, sodass dieser Vorgang nicht zu einem undefinierten Zeitpunkt unterbrochen werden kann und die Chipkarte 100 nicht in einen undefinierten Zustand kommt, welcher ein mögliches Angriffsszenario bieten könnte.

2. Ein Bediener 116 eines Chipkartenterminals 110 authentisiert sich gegenüber dem Chipkartenterminals 110, um die Ausführung der Nachladenfunktion des Programms 140 zur Änderung der Datenstruktur freizuschalten. Dies geschieht z.B. mittel PIN-Eingabe des Bedieners 116 in den Chipkartenterminal 110 und Prüfung der Korrektheit der PIN durch das SE 142.

3. Ferner authentisiert sich auch der Chipkartenterminal 110 gegenüber der Chipkarte 100, wozu z.B. das PACE-Protokoll in Verbindung mit Terminal-Authentication (TA) und Chip Authentication (CA) verwendet werden kann oder ein anderes kryptografisches Protokoll, wie zum Beispiel ein Challenge-Response-Protokoll unter Verwendung des in dem Secure Element 142 gespeicherten privaten Schlüssels des Chipkartenterminals 110.
Je nach Ausführungsform kann es ferner vorgesehen sein, dass der Chipkartenterminal 110 seine Berechtigung zur Vornahme einer Änderung oder Löschung der Datengruppe DGi gegenüber der Chipkarte 100 nachweisen muss, beispielsweise mithilfe eines Berechtigungszertifikats, das heißt eines digitalen Zertifikats, in dem die Rechte des Chipkartenterminals 110 zum Ändern und/oder Löschen von Datengruppen spezifiziert sind.

4. Beispielsweise wird im Rahmen der Authentifizierung des Chipkartenterminals 110 aufgrund der Ausführung des entsprechenden kryptografischen Protokolls ein symmetrischer Schlüssel, das heißt ein sogenannter Session Key, vereinbart, beispielsweise durch ein Diffie-Hellman-Protokoll, welcher für die verschlüsselte Kommunikation über den Kommunikationskanal 134 verwendet wird.

5. Der Chipkartenterminal 110 führt dann unter der Voraussetzung seiner erfolgreichen Authentifizierung und der Authentifizierung des Inhabers gegenüber der Chipkarte 100 einen Schreibzugriff auf die Chipkarte 100 durch, um die Datengruppe DGi durch die geänderte Datengruppe DG'i in der dadurch entstehenden geänderten Datenstruktur 124' zu speichern. Dies kann so erfolgen, dass die Datenstruktur 124 in dem Speicher 104 zunächst kopiert wird und dann in der Kopie die Änderung gespeichert wird, wobei die ursprüngliche Datenstruktur 124 beibehalten oder gelöscht werden kann oder indem die Datengruppe DGi in der ursprünglichen Datenstruktur 214 durch den Schreibzugriff mit der geänderten DG'i überschrieben wird.

Um nun für die geänderte Datenstruktur 124' ein entsprechend aktualisiertes Sicherheitsobjekt 126' mit einer aktualisierten Signatur 128' zu erzeugen, werden nachfolgend weitere Schritte durchgeführt:

6. Der Chipkartenterminal 110 baut über seine Netzwerkschnittstelle 144 und das Netzwerk 148 den Kommunikationskanal 146 zu der Signaturvorrichtung 112 auf. Hierüber überträgt der Chipkartenterminal 110 eine Anforderung 164 für die Erzeugung eines aktualisierten Sicherheitsobjekts 126' an die Signaturvorrichtung 112. Diese Anforderung 164 beinhaltet diejenigen Daten, die die Signaturvorrichtung 112 hierzu benötigt, nämlich beispielsweise die Datengruppen der geänderten Datenstruktur 124' und/oder deren Hash-Werte. Beispielsweise liest hierzu das Chipkartenterminal 110 das Sicherheitsobjekt 126, welches diese Hash-Werte beinhaltet, und überträgt dieses zusammen mit der geänderten Datengruppe DG'i oder deren Hash-Wert Hash' (DG'i) über den Kommunikationskanal 146 an die Signaturvorrichtung 112.

7. Die Signaturvorrichtung 112 erzeugt dann aufgrund der Anforderung 164 das aktualisierte Sicherheitsobjekt 126' mit der geänderten Signatur 128' über die Kombination der Hash-Werte der Datengruppen, einschließlich des neuen Hash-Werts Hash'(DG'i). Dies kann so erfolgen, dass die Signaturvorrichtung 112 die Hash-Werte aus dem Sicherheitsobjekt 126 übernimmt, wobei der Hash (DGi) durch Hash' (DG'i) ersetzt wird, und dann diese Hash-Werte konkateniert, um darüber die geänderte Signatur S' 128' zu bilden, das heißt

$$S' = sign\ (Hash(DG1)\ ||\ Hash(DG2),\ ||\ ...\ ||\ Hash'(DG'i)\ ||\ ...\ ||\ Hash(DG\ N),\ PK)$$

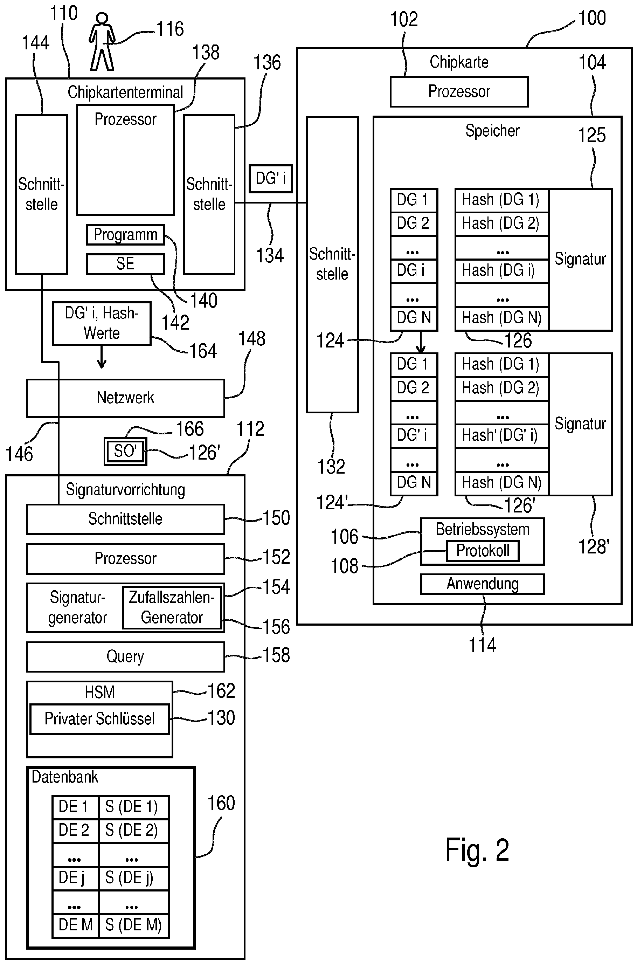

8. Das so von der Signaturvorrichtung 112 erzeugte aktualisierte Sicherheitsobjekt 126' wird dann als Antwort 166 auf die Anforderung 164 über den Kommunikationskanal 146 von der Signaturvorrichtung 112 an den Chipkartenterminal 110 übertragen, der dann anschließend das aktualisierte Sicherheitsobjekt 126' über den Kommunikationskanal 134 zu der Chipkarte 100 überträgt, sodass das aktualisierte Sicherheitsobjekt 126' in dem Speicher 104 gespeichert wird, wobei hierbei - je nach Ausführungsform - das ursprüngliche Sicherheitsobjekt 126 beibehalten oder durch das aktualisierte Sicherheitsobjekt 126' überschrieben wird, wobei ersteres bei der Ausführungsform gemäß Fig. 2 der Fall ist. Dadurch erhält die aktualisierte Datenstruktur 124' ein Sicherheitsobjekt 126', sodass die Chipkarte 100 nunmehr in ihrem Wirkbetrieb die geänderte Datenstruktur 124' verwenden kann, da diese aufgrund des Sicherheitsobjekts 126' verifizierbar ist.

Nach einer Ausführungsform der Erfindung ist die geänderte Datengruppe DG'i in dem Chipkartenterminal 110 oder in dem Secure Element 142 gespeichert oder der Chipkartenterminal 110 empfängt die entsprechende Information, zum Beispiel über das Netzwerk 148, um die geänderte Datengruppe DG'i über den Kommunikationskanal 134 in dem oben genannten Schritt 5. speichern zu können.

Nach einer Ausführungsform der Erfindung wird aufgrund der Anforderung 164 nicht zwangsläufig durch den Signaturgenerator 154 die Signatur S' erzeugt, sondern es wird wie folgt vorgegangen:

a) Von der Signaturvorrichtung 112 wird die Kombination K' der Hash-Werte mit dem geänderten Hash-Werts der Datengruppe DG'i, das heißt

$$K' = Hash(DG1)\ ||\ Hash(DG2),\ ||\ ...\ ||\ Hash'(DG'i)\ ||\ ...\ ||\ Hash(DG\ N)$$

für die Erzeugung einer Datenbankabfrage durch das Programmmodul 158 mit dieser Kombination K' als Zugriffsschlüssel verwendet. Wenn beispielsweise K' = DEj, dann gibt die Datenbank 160 daraufhin die Signatur S (DE j) aus, die als die Signatur S' 128' des geänderten Sicherheitsobjekts 126' verwendet werden kann, das heißt S' = S(DE j).

b) Wenn die Abfrage der Datenbank 160 mit der Kombination K' keinen Datenbanktreffer liefert, wird die Signatur S' des geänderten Sicherheitsobjekt 126' durch den Signaturgenerator 154 erzeugt, sodass man auch in diesem Fall das geänderte Sicherheitsobjekt 126' erhält. Zusätzlich wird ein neuer Eintrag in der Datenbank 160 gespeichert, nämlich die neu erzeugte Signatur S' mit der Kombination K' als Zugriffsschlüssel. Dies hat den Vorteil, dass für eine nachfolgende Anforderung 164 für eine andere Chipkarte, in der dieselbe Änderung oder Löschung wie in der Chipkarte 100 erfolgen soll, nicht erneut eine Signatur S' erzeugt werden muss, sondern auf die bereits in der Datenbank 160 gespeicherte Signatur S' zugegriffen werden kann.

Dies ist besonders vorteilhaft, wenn für die Erzeugung der Signatur ein Signaturalgorithmus verwendet wird, in den eine Zufallszahl eingeht, da dann die Signatur bei mehrfacher Erzeugung für verschiedene Chipkarten chipkartenindividuell wäre, was ein Nachverfolgen bei der Verwendung der Chipkarten ermöglichen würde. Insbesondere könnte so auch bei einem anonymen Einsatz der Chipkarte 100 auf den Inhaber rückgeschlossen werden. Dies wird dadurch vermieden, indem gemäß der hier betrachteten Ausführungsform nicht mehrfach für dieselben Daten, das heißt hier die geänderte Datenstruktur 124', Signaturen erzeugt werden, sondern für dieselben Daten immer dieselbe Signatur S' verwendet wird. Dies ermöglicht es einerseits besonders sichere Signaturalgorithmen einzusetzen, in die ein Zufallswert eingeht, ohne den Nachteil in Kauf zu nehmen, dass hierdurch eine Individualisierung der Chipkarte aufgrund der Signatur des Sicherheitsobjekts 126' erfolgt.

Anzumerken ist, dass die Datenbank 160 initial leer sein kann, und bei der nachfolgenden Änderung oder Löschung von Datenstrukturen in Chipkarten dynamisch mit Signaturen gefüllt wird.

Nach einer Ausführungsform der Erfindung liest das Chipkartenterminal 110 die geänderte Datenstruktur 124' in dem oben genannten Schritt 5. nach der Speicherung der Änderung oder Löschung aus dem Speicher 104 aus und überträgt diese anschließend mit der Anforderung 164. Durch das Speichern der geänderten Datenstruktur 124' in den Speicher 104 und das anschließende Auslesen der zuvor gespeicherten Datenstruktur 124' aus dem Speicher 104 wird sichergestellt, dass die Änderung tatsächlich in den Speicher 104 gespeichert wurde, sodass die mit der Anforderung 104 an die Signaturvorrichtung 112 übermittelten Daten mit der Änderung der Datenstruktur 124' tatsächlich übereinstimmen.

Nach einer Ausführungsform der Erfindung prüft die Chipkarte 100 nach der Speicherung der aktualisierten Signatur 128', ob diese tatsächlich valide ist und zu der geänderten Datenstruktur 124' gehört. Nur wenn dies der Fall ist, sendet die Chipkarte 100 über den Kommunikationskanal 134 eine Bestätigung, womit der Aktualisierungsvorgang abgeschlossen ist und wonach erst die Chipkarte 100 aus dem Chipkartenterminal 110 ausgegeben wird.

Nach einer Ausführungsform der Erfindung kann die Authentisierung des Chipkartenterminals 110 gegenüber der Signaturvorrichtung 112 und die Übertragung der geänderten Datenstruktur 124' mit der Anforderung 164 wie folgt durchgeführt werden:

- Durch den Chipkartenterminal 110 wird die Konkatenierung PuK.AD || Sicherheitsobjekt 126 || DG'i || SIGN gebildet, wobei SIGN = sign (Sicherheitsobjekt 126 || DG'i, PrK.AD), und über den Kommunikationskanal 146 an die Signaturvorrichtung übertragen.

- Anhand dieser Information prüft die Signaturvorrichtung 112 dann die Gültigkeit und die Berechtigung, die mit dem öffentlichen Schlüssel PuK.AD verknüpft ist. Ferner werden SIGN und das Sicherheitsobjekt 126 verifiziert und dann wird das geänderte Sicherheitsobjekt 126' mithilfe von PrK.DS erzeugt, wobei die Signatur des geänderten Sicherheitsobjekts 126' PuK.DS beinhaltet.

- Das geänderte Sicherheitsobjekt 126' wird dann mit der Antwort 166 übertragen.

- Das Chipkartenterminal 110 prüft und verifiziert dann das geänderte Sicherheitsobjekt 126'.

Vor der Übermittlung kann eine zusätzliche einseitige Authentisierung des Chipkartenterminals 110 gegenüber der Signaturvorrichtung 112 oder eine gegenseitige Authentisierung erfolgen. Ferner kann die Übermittlung der Daten über den Kommunikationskanal 146 verschlüsselt erfolgen, beispielsweise mithilfe eines symmetrischen Schlüssels, der aus der Authentisierung zwischen Chipkartenterminal 110 und der Signaturvorrichtung 112 abgeleitet worden ist.

Gemäß einer weiteren Ausführungsform kann die Erzeugung der Signatur SIGN und deren Prüfung entfallen, wobei dann eine andere Authentisierung des Chipkartenterminals 110 gegenüber der Signaturvorrichtung 112 erforderlich ist.

Nach einer weiteren Ausführungsform der Erfindung beinhaltet die Anforderung 164 nicht die zur Erzeugung der Signatur 128' bzw. der zum Lesen der Signatur 128' aus der Datenbank 160 erforderlichen Daten. In diesem Fall baut die Signaturvorrichtung 112 über die Kommunikationskanäle 146 und 134 eine gesicherte und/oder authentisierte Verbindung vorzugsweise mit Ende-zu-Ende-Verschlüsselung zu der Chipkarte 100 auf, über die die Signaturvorrichtung 112 die für die Erzeugung der aktualisierten Signatur 128' notwendigen Daten ausliest. Nach der Erzeugung der aktualisierten Signatur 128' bzw. nach deren Auslesen aus der Datenbank 180 schreibt die Signaturvorrichtung 112 das geänderte Sicherheitsobjekt 126' mit der aktualisierten Signatur 128' über diese gesicherte und/oder authentisierte Verbindung in die Chipkarte 100.

Die Fig. 3 zeigt eine Ausführungsform der Erfindung, bei der in der Chipkarte 100 neben den nicht chipkartenindividuellen Daten der Datenstruktur 124 weitere chipkartenindividuelle Daten gespeichert sind, um hierdurch z.B. ein elektronisches ID-Dokument zu realisieren.

In dem Speicher 104 ist hierzu zumindest ein Attribut 118 gespeichert, wobei es sich bei dem Attribut 118 um ein Attribut des Inhabers handeln kann, wie zum Beispiel biometrische Daten des Inhabers, insbesondere Fingerabdruckdaten oder Irisscandaten oder eine andere, den Inhaber oder die Chipkarte 100 selbst betreffende Personalisierungsinformation. Dem Attribut 118 ist eine digitale Signatur zugeordnet.

Beispielsweise kann das Attribut 118 in einer sogenannten Logical Data Structure (LDS) 120 gespeichert sein, wie sie zum Beispiel von der International Civil Aviation Organization (ICAO) spezifiziert ist, vergleiche ICAO Doc9303 "Machine Readable Travel Documents", Part 1, Vol. 2, Sect. III, Fig. III-2, Sixth Edition 2006. Die Signatur, die dem Attribut 118 zugeordnet ist, befindet sich in diesem Fall in dem der LDS 120 zugeordneten Security Data Object (SOD) 122 wie es zum Beispiel in ICAO "Machine Readable Travel Documents", Technical Report, PKI for Machine Readable Travel Documents Offering ICC Read-Only Access, Version 1.1, 1. Oktober 2004 spezifiziert ist.

Das Attribut 118 kann von z.B. dem Chipkartenterminal 110 oder einem anderen Chipkartenterminal für einen Ausweiskontrolle aus dem Speicher 104 ausgelesen werden, nachdem sich das betreffende Chipkartenterminal gegenüber der Chipkarte 100 authentifiziert hat und ggf. weitere kryptographische Prüfungen erfolgreich durchgeführt worden sind. Hierbei können kryptographische Parameter zum Einsatz kommen, die z.B. in der Datenstruktur 124' gespeichert sein können.

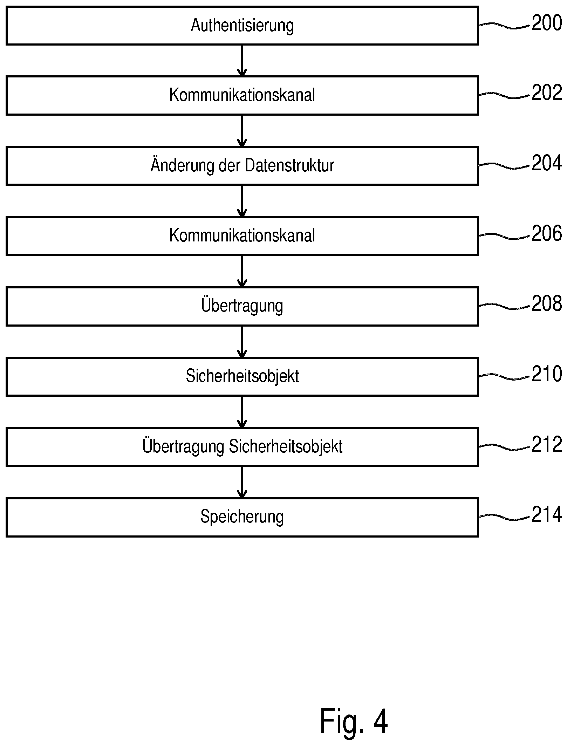

Die Figur 4 zeigt ein Flussdiagramm einer Ausführungsform eines erfindungsgemäßen Verfahrens. In dem Schritt 200 führt der Inhaber die Chipkarte 100 in den mechanischen Einzug des Chipkartenterminals 110 ein und authentifiziert sich dann gegenüber der Chipkarte 100, beispielsweise durch Eingabe seiner PIN in das Chipkartenterminal 110. Ferner authentifiziert sich auch das Chipkartenterminal 110 gegenüber der Chipkarte 100, sodass es in dem Schritt 202 zum Aufbau des Kommunikationskanals 134 kommt, der vorzugsweise zum Beispiel mit einem bei der Authentisierung des Chipkartenterminals 110 gegenüber der Chipkarte 100 ausgehandelten symmetrischen Schlüssels gesichert ist.

In dem Schritt 204 schreibt der Chipkartenterminal 110 dann eine Änderung der Datenstruktur 124 in den Speicher 104 der Chipkarte 100, wobei es sich bei dieser Änderung um das Schreiben einer zusätzlichen Datengruppe DG'i, das Löschen der Datengruppe DG i oder eine Aktualisierung der Datengruppe DG i durch die geänderte Datengruppe DG'i handelt.

In dem Schritt 206 wird der Kommunikationskanal 146 zwischen dem Chipkartenterminal 110 und der Signaturvorrichtung 112 aufgebaut, wobei sich vorzugsweise zumindest das Chipkartenterminal 110 gegenüber der Signaturvorrichtung 112 authentisieren muss und der Kommunikationskanal 146 mit einem Secure-Messaging-Verfahren gesichert wird, beispielsweise durch einen bei der Authentisierung ausgehandelten Session Key.

In dem Schritt 208 wird dann die Anforderung 164 von dem Chipkartenterminal 110 an die Signaturvorrichtung 112 übertragen, die je nach Ausführungsform auch die für die Erzeugung des geänderten Sicherheitsobjekts 126' bzw. der Signatur 128' erforderlichen Daten beinhaltet. Daraufhin wird in dem Schritt 210 durch die Signaturvorrichtung 112 das geänderte Sicherheitsobjekt 126' erzeugt, wobei zur Ermittlung der Signatur S' 128' auf die Datenbank 160 zugegriffen wird, und nur dann, wenn die Signatur S' nicht bereits in der Datenbank 160 gespeichert ist, diese mithilfe des Signaturgenerators 154 erzeugt wird.

In dem Schritt 212 erfolgt schließlich die Übertragung des Sicherheitsobjekts 126' von der Signaturvorrichtung 112 an die Chipkarte 100 entweder über die Kommunikationskanäle 146 und 134 oder direkt über einen Kommunikationskanal mit Ende-zu-Ende-Verschlüsselung, der über die Kommunikationskanäle 146 und 134 aufgebaut wird. In dem Schritt 214 erfolgt die Speicherung und vorzugsweise die Verifizierung des Sicherheitsobjekts 126' durch die Chipkarte 100.

Bezugszeichenliste

| 100 | Chipkarte |
| 102 | Prozessor |

| 104 | Speicher |
| --- | --- |
| 106 | Chipkartenbetriebssystem |
| 108 | Funktion |
| 110 | Chipkartenterminal |
| 112 | Signaturvorrichtung |
| 114 | Anwendung |
| 116 | Bediener |
| 118 | Attribut |
| 120 | Logical Data Structure (LDS) |
| 122 | Security Data Object (SOD) |
| 124, 124' | Datenstruktur |
| 126, 126' | Sicherheitsobjekt |
| 128, 128' | Signatur |
| 130 | privater Schlüssel |
| 132 | Schnittstelle |
| 134 | Kommunikationskanal |
| 136 | Kommunikationskanal |
| 138 | Prozessor |
| 140 | Programm |
| 142 | Secure Element (SE) |
| 144 | Netzwerkschnittstelle |
| 146 | Kommunikationskanal |
| 148 | Netzwerk |
| 150 | Netzwerkschnittstelle |
| 152 | Prozessor |
| 154 | Signaturgenerator |
| 156 | Zufallszahlengenerator |
| 158 | Programmmodul |
| 160 | Datenbank |
| 162 | Hochsicherheitsmodul (HSM) |
| 164 | Anforderung |
| 166 | Antwort |

## Patentansprüche

1. Verfahren zur Änderung einer in einem geschützten Speicherbereich (104) einer Chipkarte (100) gespeicherten Datenstruktur (124), wobei die Datenstruktur mehrere Datengruppen (DG1, DG2, ... DGi, ..., DG N) beinhaltet, wobei in dem geschützten Speicherbereich ein Sicherheitsobjekt (126) für die Datenstruktur gespeichert ist, das einen Hash-Wert jeder der Datengruppen und eine Signatur (128) über eine Kombination (K) der Hash-Werte beinhaltet, wobei die Signatur mit einem privaten Schlüssel (130) einer Signaturvorrichtung (112) erzeugt worden ist, mit folgenden Schritten:

   - Authentisierung eines Chipkartenterminals (110) gegenüber der Chipkarte,
   - Aufbau eines ersten Kanals (134) zwischen dem Chipkartenterminal und der Chipkarte,
   - Änderung zumindest einer der Datengruppen (DG' i) der in der Chipkarte gespeicherten Datenstruktur durch einen Schreibzugriff des Chipkartenterminals auf den geschützten Speicherbereich über den ersten Kanal,
   - Aufbau eines zweiten Kanals (146) zu der Signaturvorrichtung über ein Netzwerk,
   - Übertragung zumindest derjenigen Hash-Werte der Datengruppen der Datenstruktur des Sicherheitsobjekts, die durch die Änderung nicht betroffen sind sowie der geänderten Datengruppe (DG' i) und/oder eines Hash-Werts (Hash' DG'i) der geänderten Datengruppe über den zweiten Kanal an die Signaturvorrichtung,
   - Erzeugung eines aktualisierten Sicherheitsobjekts (126') für die geänderte Datenstruktur (124') durch die Signaturvorrichtung,
   - Übertragung des aktualisierten Sicherheitsobjekts von der Signaturvorrichtung an die Chipkarte,
   - Speicherung des aktualisierten Sicherheitsobjekts der geänderten Datenstruktur in dem gesicherten Speicherbereich der Chipkarte.

2. Verfahren nach Anspruch 1, wobei die zumindest eine Datengruppe (DG i) eine kryptografische Information beinhaltet, die durch den Schreibzugriff des Chipkartenterminals geändert wird (DG' i), wobei in dem geschützten Speicherbereich der Chipkarte zumindest ein Attribut (118) gespeichert ist und die Chipkarte zur Ausführung eines kryptografischen Protokolls ausgebildet ist, dessen erfolgreiche Durchführung Voraussetzung für einen externen Lesezugriff auf das Attribut ist, wobei die kryptografische Information zur Verwendung in dem kryptografischen Protokoll vorgesehen ist.

3. Verfahren nach Anspruch 2, wobei es sich bei der kryptografischen Information um Domainparameter für elliptische Kurvenkryptografie, insbesondere zur Durchführung des PACE-Protokolls, einen kryptografischen Gruppenschlüssel, einen öffentlichen Schlüssel, insbesondere für die Chipauthentisierung, Informationen zur Spezifizierung der Erzeugung eines Identifikators für eine pseudonyme Identifizierung des Nutzers, und/oder Domainparameter für ein Protokoll zur pseudonymen Identifizierung handelt.

4. Verfahren nach Anspruch 2 oder 3, wobei das kryptografische Protokoll, dessen erfolgreiche Durchführung Voraussetzung für den externen Lesezugriff auf das Attribut ist, auch für die Authentisierung des Chipkartenterminals für die Änderung der zumindest einen Datengruppe ausgeführt wird.

5. Verfahren zum Löschen einer Datengruppe (DG i) aus einer in einem geschützten Speicherbereich (104) einer Chipkarte (100) gespeicherten Datenstruktur (124'), wobei die Datenstruktur mehrere Datengruppen (DG1, DG2, ... DGi, ..., DG N) beinhaltet, wobei in dem geschützten Speicherbereich ein Sicherheitsobjekt (126) für die Datenstruktur gespeichert ist, das einen Hash-Wert jeder der Datengruppen und eine Signatur (128) über eine Kombination der Hash-Werte beinhaltet, wobei die Signatur mit einem privaten Schlüssel (130) einer Signaturvorrichtung erzeugt worden ist, mit folgenden Schritten:

   - Authentisierung eines Chipkartenterminals (110) gegenüber der Chipkarte,
   - Aufbau eines ersten Kanals (134) zwischen dem Chipkartenterminal und der Chipkarte,
   - Löschen der Datengruppe (DG i) der in der Chipkarte gespeicherten Datenstruktur durch einen Schreibzugriff des Chipkartenterminals auf den geschützten Speicherbereich über den ersten Kanal,
   - Aufbau eines zweiten Kanals (146) zu der Signaturvorrichtung über das Netzwerk,
   - Übertragung zumindest derjenigen Hash-Werte der Datengruppen der Datenstruktur des Sicherheitsobjekts, die durch die Löschung nicht betroffen sind, über den zweiten Kanal,
   - Erzeugung eines aktualisierten Sicherheitsobjekts (126') für die geänderte Datenstruktur durch die Signaturvorrichtung,
   - Übertragung des aktualisierten Sicherheitsobjekts und Speicherung des aktualisierten Sicherheitsobjekts in dem geschützten Speicherbereich der Chipkarte.

6. Verfahren nach einem der vorhergehenden Ansprüche, wobei sich das Chipkartenterminal gegenüber der Signaturvorrichtung über das Netzwerk authentisiert.

7. Verfahren nach einem der vorhergehenden Ansprüche, wobei die Signaturvorrichtung einen Signaturgenerator (154) aufweist, der zur Ausführung eines Signaturalgorithmus ausgebildet ist, in den für die Erzeugung einer Signatur ein Zufallswert (156) eingeht, und die Signaturvorrichtung eine Datenbank aufweist, in der Datenelemente (DE 1, DE2, ...DEj,...DE M) und mit dem Signaturalgorithmus erzeugte Signaturen der Datenelemente gespeichert sind, wobei die Signaturen mit dem jeweils zugehörigen Datenelement als Datenbankszugriffschlüssel aus der Datenbank lesbar sind, mit folgenden weiteren Schritten:

   - Erzeugung eines Hash-Werts für die zumindest eine geänderte Datengruppe,
   - Erzeugung einer geänderten Kombination (K') der Hash-Werte der geänderten Datenstruktur,
   - Erzeugung des aktualisierten Sicherheitsobjekts durch

      a) Zugriff auf die Datenbank mit der geänderten Kombination der Hash-Werte als Datenbankzugriffsschlüssel,
      b) für den Fall der Ausgabe einer Signatur aufgrund des Zugriffs, Erzeugung des aktualisierten Sicherheitsobjekts mit der von der Datenbank ausgegebenen Signatur,
      c) im gegenteiligen Fall Erzeugung einer Signatur für das aktualisierte Sicherheitsobjekt durch Signierung der geänderten Kombination durch den Signaturgenerator.

8. Verfahren nach Anspruch 7, im Fall der Erzeugung der Signatur in dem Schritt c), Speicherung der Signatur als Datenelement der Datenbank mit der geänderten Kombination als Datenbankzugriffsschlüssel.

**9.** Verfahren nach einem der obigen Ansprüche, wobei der zweite Kanal zwischen dem Chipkartenterminal und der Signaturvorrichtung oder zwischen der Chipkarte und der Signaturvorrichtung über das Netzwerk aufgebaut wird.

**10.** Signaturvorrichtung zur Signierung eines Datenelements mit

- einem Signaturgenerator (154) zur Ausführung eines Signaturalgorithmus, in den für die Erzeugung eines Signatur eine Zufallswert (156) eingeht,
- einer Datenbank (160), in der Datenelemente und mit dem Algorithmus erzeugte Signaturen der Datenelemente gespeichert sind, wobei die Signaturen mit dem jeweils zugehörigen Datenelement als Datenbankzugriffsschlüssel zugreifbar sind,
- einer Schnittstelle (150) zum Empfang einer Signaturanforderung von einem Chipkartenterminal (110) über ein Netzwerk (148),

wobei die Signaturvorrichtung dazu ausgebildet ist, vor der Signierung eines Datenelements auf die Datenbank mit dem Datenelement als Zugriffsschlüssel zuzugreifen, um die Signatur des Datenelements aus der Datenbank auszulesen, und wenn der Zugriff auf die Datenbank mit dem zu signierenden Datenelement als Zugriffsschlüssel keinen Datenbanktreffer hervorruft, das Datenelement mit dem Signaturgenerator zu signieren, die Signatur über die Schnittstelle auszugeben und die Signatur mit dem Datenelement als Zugriffsschlüssel in der Datenbank zu speichern.

**11.** Signaturvorrichtung nach Anspruch 10, wobei es sich bei dem Signaturalgorithmus um Elliptic Curve Digital Signature Algorithm (ECDSA) oder Optional Asymmetric Encryption Padding (OAEP) handelt.

**12.** Elektronisches System mit einer Chipkarte (100), die einen geschützten Speicherbereich (104) aufweist, in dem eine Datenstruktur (124) gespeichert ist, wobei die Datenstruktur mehrere Datengruppen beinhaltet, wobei in dem geschützten Speicherbereich ein Sicherheitsobjekt (126) für die Datenstruktur gespeichert ist, das einen Hash-Wert jeder der Datengruppen und eine Signatur über eine Kombination (K) der Hash-Werte beinhaltet, wobei die Signatur mit einem privaten Schlüssel (130) einer Signaturvorrichtung erzeugt worden ist, und mit einem Chipkartenterminal (110) und einer Signaturvorrichtung (112), die mit dem Chipkartenterminal über ein Netzwerk (148) verbindbar ist, wobei das Chipkartenterminal dazu ausgebildet ist, eine Änderung zumindest einer der Datengruppen der Datenstruktur durch einen Schreibzugriff auf den geschützten Speicherbereich der Chipkarte vorzunehmen und wobei die Signaturvorrichtung dazu ausgebildet ist, für die geänderte Datenstruktur mit der zumindest einen geänderten Datengruppe ein aktualisiertes Sicherheitsobjekt (126') zu generieren und über das Netzwerk an das Chipkartenterminal zur Speicherung in dem geschützten Speicherbereich der Chipkarte zu übertragen.

**13.** Elektronisches System nach Anspruch 12, wobei der Chipkartenterminal einen mechanischen Einzug für den Einzug der Chipkarte in das Innere des Chipkartenterminals aufweist, und das Chipkartenterminal so ausgebildet ist, dass die Chipkarte vor der Authentisierung des Chipkartenterminals in das Chipkartenterminal eingezogen wird und erst nach der Speicherung des aktualisierten Sicherheitsobjekts in dem geschützten Speicherbereich der Chipkarte wieder aus dem mechanischen Einzug ausgegeben wird.

**14.** Elektronisches System nach Anspruch 12 oder 13, wobei die Chipkarte und der Chipkartenterminal eine kontaktlose Schnittstelle, insbesondere eine RFID- oder eine NFC-Schnittstelle, aufweisen, insbesondere eine Very High Bit Rate (VHBR)-Schnittstelle.

**15.** Elektronisches System nach Anspruch 12, 13 oder 14, wobei die Signaturvorrichtung gemäß Anspruch 10 oder 11 ausgebildet ist.

## Claims

**1.** A method for altering a data structure (124) stored in a protected memory area (104) of a chip card (100), wherein the data structure contains multiple data groups (DG1, DG2, ... DGi, ..., DG N), wherein a security object (126) for the data structure is stored in the protected memory area, which security object contains a hash value for each of the data groups and a signature (128) by means of a combination (K) of the hash values, wherein the signature was generated using a private key (130) of a signature device (112), said method comprising the following steps:

- authenticating a chip card terminal (110) to the chip card,
- establishing a first channel (134) between the chip card terminal and the chip card,

- altering at least one of the data groups (DG' i) of the data structure stored in the chip card by means of write access by the chip card terminal to the protected memory area via the first channel,
- establishing a second channel (146) to the signature device via a network,
- transmitting at least those hash values of the data groups of the data structure of the security object that are not affected by the alteration and also of the altered data group (DG' i) and/or a hash value (Hash' DG'i) of the altered data group to the signature device via the second channel,
- generating, by the signature device, an updated security object (126') for the altered data structure (124'),
- transmitting the updated security object from the signature device to the chip card,
- storing the updated security object of the altered data structure in the secured memory area of the chip card.

2. The method according to claim 1, wherein the at least one data group (DG i) contains cryptographic information that is altered (DG' i) by the write access by the chip card terminal, wherein at least one attribute (118) is stored in the protected memory area of the chip card and the chip card is designed to execute a cryptographic protocol, the successful execution of which is a precondition for external read access to the attribute, wherein the cryptographic information is intended for use in the cryptographic protocol.

3. The method according to claim 2, wherein the cryptographic information is constituted by domain parameters for elliptic-curve cryptography, in particular for execution of the PACE protocol, a cryptographic group key, a public key, in particular for chip authentication, information for specifying the generation of an identifier for pseudonym identification of the user, and/or domain parameters for a protocol for pseudonym identification.

4. The method according to claim 2 or 3, wherein the cryptographic protocol, the successful execution of which is a precondition for external read access to the attribute, is also executed for the authentication of the chip card terminal for the alteration of the at least one data group.

5. The method for deleting a data group (DG i) from a data structure (124') stored in a protected memory area (104) of a chip card (100), wherein the data structure contains multiple data groups (DG1, DG2, ... DGi, ..., DG N), wherein a security object (126) for the data structure is stored in the protected memory area, which security object contains a hash value for each of the data groups and a signature (128) by means of a combination of the hash values, wherein the signature was generated using a private key (130) of a signature device, said method comprising the following steps:

   - authenticating a chip card terminal (110) to the chip card,
   - establishing a first channel (134) between the chip card terminal and the chip card,
   - deleting the data group (DG i) of the data structure stored in the chip card by means of write access by the chip card terminal to the protected memory area via the first channel,
   - establishing a second channel (146) to the signature device via the network,
   - transmitting at least those hash values of the data groups of the data structure of the security object that are not affected by the deletion via the second channel,
   - generating, by the signature device, an updated security object (126') for the altered data structure,
   - transmitting the updated security object and storing the updated security object in the protected memory area of the chip card.

6. The method according to one of the preceding claims, wherein the chip card terminal authenticates itself to the signature device via the network.

7. The method according to one of the preceding claims, wherein the signature device has a signature generator (154) which is designed to execute a signature algorithm which includes a random value (156) for the generation of a signature, and the signature device has a database in which data elements (DE 1, DE2, ...DE j,...DE M) and signatures of the data elements generated with the signature algorithm are stored, wherein the signatures can each be read from the database by the associated data element as database access key, said method comprising the following further steps:

   - generating a hash value for the at least one altered data group,
   - generating an altered combination (K') of the hash values of the altered data structure,
   - generating the updated security object by

      a) accessing the database with the altered combination of the hash values as database access key,

b) if a signature is output on account of the access, generating the updated security object with the signature output from the database,

c) otherwise, generating a signature for the updated security object by signing the altered combination by the signature generator.

8.  The method according to claim 7, comprising the step of, if the signature is generated in step c), storing the signature as a data element of the database with the altered combination as database access key.

9.  The method according to one of the preceding claims, wherein the second channel is established between the chip card terminal and the signature device or between the chip card and the signature device via the network.

10. A signature device for signing a data element comprising

    - a signature generator (154) for executing a signature algorithm which includes a random value (156) for the generation of a signature,
    - a database (160), in which data elements and signatures of the data elements generated with the algorithm are stored, wherein the signatures can each be accessed with the associated data element as database access key,
    - an interface (150) for receiving a signature request from a chip card terminal (110) via a network (148), wherein the signature device is designed, prior to the signing of a data element, to access the database with the data element as access key in order to read the signature of the data element from the database, and, if the access to the database with the data element to be signed as access key does not result in any database hits, to sign the data element with the signature generator, to output the signature via the interface, and to store the signature with the data element as access key in the database.

11. The signature device according to claim 10, wherein the signature algorithm is an Elliptic Curve Digital Signature Algorithm (ECDSA) or an Optional Asymmetric Encryption Padding (OAEP).

12. An electronic system comprising a chip card (100) which has a protected memory area (104) in which a data structure (124) is stored, wherein the data structure contains multiple data groups, wherein a security object (126) for the data structure is stored in the protected memory area, which security object contains a hash value for each of the data groups and a signature by means of a combination (K) of the hash values, wherein the signature was generated using a private key (130) of a signature device, the electronic system further comprising a chip card terminal (110) and a signature device (112) which can be connected to the chip card terminal via a network (148), wherein the chip card terminal is designed to alter at least one of the data groups of the data structure by means of write access to the protected memory area of the chip card, and wherein the signature device is designed to generate an updated security object (126') for the altered data structure with the at least one altered data group and to transmit the updated security object via the network to the chip card terminal for storage in the protected memory area of the chip card.

13. The electronic system according to claim 12, wherein the chip card terminal has a mechanical feed means for drawing the chip card into the chip card terminal, and the chip card terminal is designed such that the chip card is drawn into the chip card terminal prior to the authentication of the chip card terminal and is output again from the mechanical feed means only once the updated security object has been stored in the protected memory area of the chip card.

14. The electronic system according to claim 12 or 13, wherein the chip card and the chip card terminal have a contactless interface, in particular an RFID or an NFC interface, in particular a Very High Bit Rate (VHBR) interface.

15. The electronic system according to claim 12, 13 or 14, wherein the signature device is designed according to claim 10 or 11.

**Revendications**

1.  Procédé de modification d'une structure de données (124) enregistrée dans une zone de mémoire (104) sécurisée d'une carte à puce (100), où la structure de données contient plusieurs groupes de données (DG1, DG2, ..., DGi, ..., DG N), où un objet de sécurité (126) pour la structure de données qui contient une valeur de hachage de chacun des groupes de données et une signature (128) des valeurs de hachage par le biais d'une combinaison (K) est enregistré dans la zone de mémoire sécurisée, où la signature a été créée avec une clé privée (130) d'un dispositif de signature (112), avec les étapes suivantes :

- l'authentification d'un terminal de cartes à puce (110) vis-à-vis de la carte à puce,
- l'établissement d'un premier canal (134) entre le terminal de carte à puce et la carte à puce,
- la modification d'au moins un des groupes de données (DG' i) de la structure de données enregistrée dans la carte à puce par un accès en écriture du terminal de carte à puce sur la zone de mémoire sécurisée par le biais du premier canal,
- l'établissement d'un deuxième canal (146) vers le dispositif de signature par le biais d'un réseau,
- la transmission au moins des valeurs de hachage en question des groupes de données de la structure de données de l'objet de sécurité qui ne sont pas concernées par la modification, ainsi que du groupe de données (DG' i) modifié et/ou d'une valeur de hachage (Hash' DG'i) du groupe de données modifié vers le dispositif de signature par le biais du deuxième canal,
- la création d'un objet de sécurité actualisé (126') pour la structure de données modifiée (124') par le dispositif de signature,
- la transmission de l'objet de sécurité actualisé du dispositif de signature à la carte à puce,
- l'enregistrement de l'objet de sécurité actualisé de la structure de données modifiée dans la zone de mémoire sécurisée de la carte à puce.

2. Procédé selon la revendication 1, dans lequel l'au moins un groupe de données (DG i) contient une information cryptographique qui est modifiée par l'accès en écriture du terminal de carte à puce (DG' i), où au moins un attribut (118) est enregistré dans la zone de mémoire sécurisée de la carte à puce et la carte à puce est conçue pour l'exécution d'un protocole cryptographique dont l'exécution réussie est une condition pour un accès en lecture extérieur vers l'attribut, où l'information cryptographique est prévue pour l'emploi dans le protocole cryptographique.

3. Procédé selon la revendication 2, dans lequel, dans le cas de l'information cryptographique, il s'agit de paramètres de domaine pour une cryptographie sur les courbes elliptiques, notamment pour l'exécution du protocole PACE, d'une clé de groupe cryptographique, d'une clé publique, notamment pour l'authentification de la puce, d'informations concernant la spécification de la création d'un identificateur pour une identification de l'utilisateur par pseudonyme, et/ou de paramètres de domaine pour un protocole d'identification par pseudonyme.

4. Procédé selon la revendication 2 ou la revendication 3, dans lequel le protocole cryptographique, dont l'exécution réussie est une condition pour l'accès en lecture extérieur vers l'attribut, est également exécuté pour l'authentification du terminal de carte à puce pour la modification de l'au moins un groupe de données.

5. Procédé d'effacement d'un groupe de données (DG i) à partir d'une structure de données (124') enregistrée dans une zone de mémoire (104) sécurisée d'une carte à puce (100), où la structure de données contient plusieurs groupes de données (DG1, DG2, ..., DGi, ..., DG N), où un objet de sécurité (126) pour la structure de données qui contient une valeur de hachage de chacun des groupes de données et une signature (128) par le biais d'une combinaison des valeurs de hachage est enregistré dans la zone de mémoire sécurisée, où la signature a été créée avec une clé privée (130) d'un dispositif de signature, avec les étapes suivantes :

- l'authentification d'un terminal de cartes à puce (110) vis-à-vis de la carte à puce,
- l'établissement d'un premier canal (134) entre le terminal de carte à puce et la carte à puce,
- l'effacement du groupes de données (DG i) de la structure de données enregistrée dans la carte à puce par un accès en écriture du terminal de carte à puce sur la zone de mémoire sécurisée par le biais du premier canal,
- l'établissement d'un deuxième canal (146) vers le dispositif de signature par le biais d'un réseau,
- la transmission au moins des valeurs de hachage en question des groupes de données de la structure de données de l'objet de sécurité qui ne sont pas concernées par l'effacement, par le biais du deuxième canal,
- la création d'un objet de sécurité actualisé (126') pour la structure de données modifiée par le dispositif de signature,
- la transmission de l'objet de sécurité actualisé et l'enregistrement de l'objet de sécurité actualisé dans la zone de mémoire sécurisée de la carte à puce.

6. Procédé selon l'une des revendications précédentes, dans lequel le terminal de carte à puce s'authentifie vis-à-vis du dispositif de signature par le biais du réseau.

7. Procédé selon l'une des revendications précédentes, dans lequel le dispositif de signature présente un système de génération de signature (154) qui est conçu pour l'exécution d'un algorithme de signature dans lequel est impliquée une valeur aléatoire (156) pour la création d'une signature, et le dispositif de signature présente une banque de données dans laquelle des éléments de données (DE 1, DE2, ..., DE j, ..., DE M) et des signatures des éléments de données créées avec l'algorithme de signature sont enregistrées, où les signatures sont lisibles à partir de la banque de données avec l'élément de donnée respectivement correspondant sous forme de clé d'accès à la banque de données, avec les nouvelles étapes suivantes :

- la création d'une valeur de hachage pour l'au moins un groupe de données modifié,
- la création d'une combinaison modifiée (K') des valeurs de hachage de la structure de données modifiée,
- la création de l'objet de sécurité actualisé par

(a) l'accès à la banque de données avec la combinaison modifiée des valeurs de hachage servant de clé d'accès à la banque de données,
(b) dans le cas de l'édition d'une signature en raison de l'accès, la création de l'objet de sécurité actualisé avec la signature éditée par la banque de données,
(c) dans le cas contraire, la création d'une signature pour l'objet de sécurité actualisé par la signature de la combinaison modifiée par le système de génération de signature.

8. Procédé selon la revendication 7, dans le cas de la création de la signature dans l'étape c), l'enregistrement de la signature sous forme d'élément de donnée de la banque de données avec la combinaison modifiée servant de clé d'accès à la banque de données.

9. Procédé selon l'une des revendications ci-dessus, dans lequel le deuxième canal est établi entre le terminal de carte à puce et le dispositif de fourniture ou entre la carte à puce et le dispositif de signature par le biais du réseau.

10. Dispositif de signature permettant la signature d'un élément de donnée avec

- un système générateur de signature (154) permettant l'exécution d'un algorithme de signature dans lequel est impliquée une valeur aléatoire (156) pour la création d'une signature,
- une banque de données (160) dans laquelle des éléments de données et des signatures des éléments de données créées avec l'algorithme sont enregistrés, où les signatures sont accessibles avec respectivement l'élément de donnée correspondant sous forme de clé d'accès à la banque de données,
- une interface (150) permettant la réception d'une demande de signature provenant d'un terminal de carte à puce (110) par le biais d'un réseau (148),
où le dispositif de signature est conçu pour, avant la signature d'un élément de donnée, avoir accès à la banque de données avec l'élément de donnée servant de clé d'accès, afin de lire la signature de l'élément de donnée à partir de la banque de données, et lorsque l'accès à la banque de données avec l'élément de donnée à signer servant de clé d'accès ne rencontre aucune donnée cible de banque de données, pour signer l'élément de donnée avec le système générateur de signature, éditer la signature par le biais de l'interface et stocker la signature avec l'élément de donnée servant de clé d'accès dans la banque de données.

11. Dispositif de signature selon la revendication 10, dans lequel, dans le cas de l'algorithme de signature, il s'agit d'un algorithme de signature numérique de courbes elliptiques (ECDSA) ou d'un bourrage cryptographique asymétrique optionnel (OAEP).

12. Système électronique doté d'une carte à puce (100) qui présente une zone de mémoire (104) sécurisée, dans laquelle est enregistrée une structure de données (124), où la structure de données contient plusieurs groupes de données, où un objet de sécurité (126) pour la structure de données qui contient une valeur de hachage de chacun des groupes de données et une signature par le biais d'une combinaison (K) des valeurs de hachage est enregistré dans la zone de mémoire sécurisée, où la signature a été créée avec une clé privée (130) d'un dispositif de signature, et avec un terminal de carte à puce (110) et un dispositif de signature (112) qui peuvent être reliés avec le terminal de carte à puce par le biais d'un réseau (148), où le terminal de carte à puce est conçu pour effectuer une modification d'au moins un des groupes de données de la structure de données par un accès en écriture sur la zone de mémoire sécurisée de la carte à puce et où le dispositif de signature est conçu pour générer un objet de sécurité actualisé (126') pour la structure de données modifiée avec l'au moins un groupe de données modifié et pour le transmettre au terminal de carte à puce par le biais du réseau pour l'enregistrement dans la zone de mémoire sécurisée de la carte à puce.

**13.** Système électronique selon la revendication 12, dans lequel le terminal de carte à puce présente un système d'entrée mécanique pour l'entrée de la carte à puce à l'intérieur du terminal de carte à puce, et le terminal de carte à puce est conçu de telle manière que la carte à puce est entrée dans le terminal de carte à puce avant l'authentification du terminal de carte à puce et n'est libérée de nouveau de l'entrée mécanique qu'après l'enregistrement de l'objet de sécurité actualisé dans la zone de mémoire sécurisée de la carte à puce.

**14.** Système électronique selon la revendication 12 ou la revendication 13, dans lequel la carte à puce et le terminal de carte à puce présentent une interface sans contact, notamment une interface RFID ou une interface NFC, notamment une interface à très haut débit binaire (VHBR).

**15.** Système électronique selon la revendication 12, la revendication 13 ou la revendication 14, dans lequel le dispositif de signature est conçu selon la revendication 10 ou la revendication 11.

Fig. 1

Fig. 2

Fig. 3

| Authentisierung | 200 |
| Kommunikationskanal | 202 |
| Änderung der Datenstruktur | 204 |
| Kommunikationskanal | 206 |
| Übertragung | 208 |
| Sicherheitsobjekt | 210 |
| Übertragung Sicherheitsobjekt | 212 |
| Speicherung | 214 |

Fig. 4

**IN DER BESCHREIBUNG AUFGEFÜHRTE DOKUMENTE**

**In der Beschreibung aufgeführte Patentdokumente**

- FR 2856815

- DE 102007041370 A1

**In der Beschreibung aufgeführte Nicht-Patentliteratur**

- **WOLFGANG RANKL ; WOLFGANG EFFING.** Handbuch der Chipkarten. Carl Hanser Verlag, 2008
- Machine Readable Travel Documents. 2006, vol. 2

- Machine Readable Travel Documents. *Technical Report, PKI for Machine Readable Travel Documents Offering ICC Read-Only Access,* Oktober 2004